# EUROPEAN PATENT APPLICATION

(11) **EP 4 063 082 A1**
(43) Date of publication of application: **28.09.2022**
(21) Application number: 21164186.5
(22) Date of filing: 23.03.2021
(51) Int. Cl.: B25J 9/16, B25J 13/08, B25J 15/06, B25J 17/02

(54) **ROBOTIC SYSTEM AND METHOD FOR SORTING WASTE WITH SUCTION GRIPPER**

(71) Applicant: TOMRA Sorting GmbH, 56218 Mülheim-Kärlich (DE)
(72) Inventor: BALTHASAR, Dirk, 56154 BOPPARD (DE); NOACK, Nils, 56237 NAUORT (DE); WALDORF, Daniel, 56727 Mayen (DE)
(74) Representative: AWA Sweden AB

(57) **Abstract**

The inventive concept is based on the inventors' realization that by providing a sorting device for a robotic system that has two tubes being telescopically arranged and resiliently separated with a springing means, the picking and releasing of heavy objects may be improved. The inventive concept includes a method and system for conducting the sorting with a robotic arm and suction gripping system.

## Description

### Technical Field

The present invention relates to the field of sorting. More particularly, the present invention relates to a suction gripper used as picking and placing means in a process for sorting. In particular, the invention relates to a robotic suction gripper.

### Background

Industrial and domestic waste is treated as a resource and increasingly being sorted in order to recover and recycle useful components. Robotic sorting techniques are used to automatically sort large amount of mixtures of garbage into the correct recycling fractions. To receive homogeneous, uncontaminated recycling fractions, reliable sorting techniques are needed.

Robotic suction grippers are mechanisms used to pick up and move objects by applying a concentrated air flow to a portion of an object's surface with sufficient air flowed strength to hold the object to the gripper. Objects present to be sorted can for example be heavier objects, objects with irregular shapes, small objects or objects having an air flow through the object; all pose a challenge to being effectively and securely gripped and transported to the designated dropping location. The sorting of heavy objects can pose an additional challenge owing to the risk of overloading the gripping system and damaging it and techniques are needed to accurately assess the operation state of the robotic suction gripper.

There is thus a need for improvements of robotic sorting systems and method within the field of waste sorting.

### Summary of the invention

Therefore, the present invention strives to solve at least some of the above problems and to eliminate or at least mitigate some of the drawbacks in the field of sorting waste with vacuum sorters.

The inventive concept is based on the inventors' realization that by providing a sorting device for a robotic system that has two tubes being telescopically arranged and resiliently separated with a springing means, the picking and releasing of heavy objects may be improved.

In a first aspect, the above-mentioned object is achieved by a robotic vacuum sorting system for waste material. The system comprising a robotic arm adapted to move in a three-dimensional manner, and a suction gripping member, fluidly coupled to an air flow generating system via a flow channel, configured to grip an object to be sorted. The system further comprises a first tube and a second tube, telescopically arranged and movable between a collapsed state and an extended state, a springing means for exerting an axial force on the first and second tube towards the extended state, and a filter for hindering objects to be sucked towards/into the air flow generating system. Moreover, the first tube is coupled to the robot arm, and the suction gripping member is coupled to the second tube and configured to move in tandem with the second tube between an extended position and a collapsed position. The air flow generating system is further adapted to reverse an air flow to eject the object and the springing means is configured to move the first and second tube from the collapsed state to the extended state when the air flow is reversed, so as to create an additional ejecting movement.

Hereby, a system is provided that allows for moving the robotic arm in abutment to the object to be sorted, and further push the suction gripping member against the object to be sorted, wherein the two tubes are moved towards the collapsed state. This will both reduce the wear on the robotic arm and simultaneously ensure a good fit of the suction member onto the object to be sorted, so that it may be lifted away with the force from the air flow generating system. The design with two telescopically arranged tubes will increase the acceptable margin of error in determining where the surface of the object is, and therefore how long towards the object the robotic arm should be moved. An increased margin of error will lead both to higher success rate in picking up objects, but also enables a less expensive or complicated calculation of the surface position of the object to be sorted. This margin of error may be set by the overlap of the two tubes. E.g. the overlap may be 20-200mm or preferably 40-120mm in the collapsed state.

Further, by having a springing means exerting an axial force on the first and second tube towards the extended state the tubes may be kept in the extended state until they engage with an object to be sorted.

In the context of this application, a robotic arm should be interpreted as any controllable moving means that may be moved within a defined working area. This include e.g. any articulated or coordinate robots that is capable of picking an object in one place and placing it at another place. Further, a suction gripping member in the context of this application should be interpreted as a flexible member configured to abut an object to be sorted when pushed against it so that it is adapted to the surface of the object to be sorted. It may e.g. be a suction cup, a rubber nozzle or similar. The gripping member may be exchanged after being used in a number of lifts or upon damage, so as to ensure a snugly fit towards the object to be sorted. Further, an air flow generating system is to be interpreted as any system that may create an air-flow, e.g. a suction air flow or a blowing air flow. It may be for example a reversible pump, compressor, fan, or other unit.

Moreover, in the context of this application a tube should be interpreted as any type of body having a body and an inner hollow portion. The form may be, as illustrated, cylindrical but may in other embodiments have another form e.g. a square/rectangular/triangular cross-sectional shape.

The springing means should, in the context of this application be interpreted as any member that can exert a springing force. This may be, as illustrated, a number of coil springs distributed along a circular distribution. It may in other examples be a single coil spring arranged coaxially and around with e.g. the first and second tube. Other conceivable solutions may include a material that itself is resilient, such as rubber.

Moreover, in the context of this application vacuum should be read as negative pressure i.e. a pressure being lower than the ambient pressure, and not necessarily a pure vacuum state. The vacuum or negative pressure is the result of a suction air flow and a blockage of the air flow at the suction gripping member. In the context of this application "gripping" should be interpreted as the object being held to the suction gripping member by means of the negative air pressure. The term that something is "coupled to" includes something being directly or indirectly mechanically coupled to each other. There might be several or no intermediate members and portions that form part of such mechanical coupling.

In another embodiment, the robotic vacuum sorting system comprises a sensor configured to determine a positional state of the first tube relative the second tube.

Hereby, they system may get input data to ensure that the suction gripping member is snuggly fitted against the object to be sorted. Also, even if the system is provided with a height indication of the object to be sorted from e.g. a camera or other input device this height indication may be corrected by sensing the telescopic overlap between the first and second tubes together with positional data from the robotic arm.

In one embodiment, the sensor is adapted to measure the exerted axial force by the springing means on the first and second tube to determine said positional state of the first tube relative the second tube. In some embodiments the sensor may be integrated in the springing means. In other embodiments the sensor may be a separate unit sensing either the force or the relative position between the first and second tube. In some embodiments, the sensor may be a capacitive or inductive sensor. In some embodiments, the sensor may be used to indicate that the first tube and the second tube has reached the end position (the collapsed state). Hereby, the robot arm may be prevented from pushing harder towards the object to be sorted, so as not to damage any parts of the sorting system, including the suction gripping member, the robot arm itself or even the conveyer belt.

In another embodiment, the sensor is adapted to detect a successful grip of the object to be sorted and/or an overload state upon gripping an object of a weight exceeding a predetermined value.

Hereby, the system may detect when an object is too heavy to be sorted, in order to avoid accidental dropping the object. Additionally or alternatively, the sensor may be used to determine if the pick was successful or if a new attempt should be conducted.

Optionally, the robotic vacuum sorting system may further include a weight sensor configured to measure the weight of the object to be sorted. The weight of the gripped object may then be used to detect a successful grip of the object to be sorted and/or measure an overload state upon gripping an object of a weight exceeding a predetermined value. In some embodiments, the force from the springing means and force from the air flow may be dimensioned so that the first and second members are held from the extended state when the suction gripping member is engaged with an object to be sorted of an acceptable weight. Whereas if the weight of the object is so large that it pulls the second tube into the extended state relative the first tube, then the object is too heavy to lift and the sensor may signal an overload state. An overload state may mean that there is an increased risk of dropping the object due to the weight of the object.

In yet another embodiment, the robotic vacuum sorting system comprises a pressure sensor configured to sense an air pressure in the flow channel to detect air blockage. Hereby, any blockage (or leakage) of air in the flow channel may be detected by means of the pressure sensor. A leakage of air may be indicative of that one or more parts needs to be repaired or replaced. If a correct blockage is detected, it will enable determination of a successful grip of the object to be sorted.

In one embodiment, the sensor is configured to initiate a warning signal so as to warn a user that one or more components, such as the suction gripping member or the second tube, needs maintenance or replacement. The sensor may be placed at any place in the flow channel. It may be placed in the gripping system or downstream (in suction flow) towards the air flow generating means.

In another embodiment, the first and second tubes are in the extended state until a force from the vacuum brings the first and second tube into the collapsed state upon engaging an object to be sorted.

By exerting an axial force with the springing means so that the tubes are in the extended state, a full damping range is enabled upon the engagement of the suction gripping member onto the object to be sorted. Thus, the collapsible range from the extended state to the collapsed state is available for the damping.

In another embodiment, the cross-sectional flow opening in the flow channel is configured to avoid pressure drop in the flow channel. In some embodiments this is done by avoiding any orifice reductions upstream in a suction flow. In some embodiments, the orifice in the different portions of the flow channel is substantially the same. Hereby, the flow generated by the air flow generating means may be kept substantially equal throughout the flow channel.

In another embodiment, the robotic vacuum sorting system comprises a filter cavity arranged in the flow channel, said filter cavity having a larger cross-section than the flow opening, and wherein a filter opening is equal or larger than the cross sectional flow opening in the flow channel. Hereby, the filter will not either constitute a flow restriction, since the sum of the flow openings in the filter is the same or larger as the flow opening in the other parts of the flow channel. In some embodiment the filter is a wide-meshed filter only filtering objects larger than e.g. 0.1mm, 0.5mm, 1mm, or 5 mm in cross-sectional distance.

In another embodiment, the first tube is made of a material of a first wear coefficient and the second tube is made of a material of a second smaller wear coefficient. Hereby, the second tube may wear before the first tube will. By having two tubes with different wear coefficients, it is possible to use a lubrication free design. A lubrication free design is preferable in this application due to that smaller particles often accumulates in lubricated details.

The wear coefficient is an example of how to indicate that a material is more or less resistant to wear (or prone to wear). A larger coefficient indicates that the material is less resistant to wear, and a lower coefficient that it is more prone to wear. As an example, polythene has a wear coefficient of about 1.3 x 10⁻⁷ and hard tool steel has a wear coefficient of 1.3 x 10⁻⁴. Another way to describe this would the materials abrasive wear resistance.

In one embodiment, the first tube is made of a metal and the second tube is made of a polymer material. In further one example, the first tube may be made of aluminum and second tube may be made of a for example PU or ABS.

Preferably, the first and second tubes are made from rigid materials, so as to avoid deformation. Deformation of the tubes could lead to undesired radial movements causing risk for unintentionally dropping the object to be sorted. Thus, having rigid material that are resistant to bending, a device resulting in fewer unintentional drops will be provided.

In one embodiment, the first tube and second tube are at least 10mm axially overlapping in the extended state, preferably at least 20mm axially overlapping and most preferably 30 mm axially overlapping. Hereby, the first and second tubes may be radially stable so as to avoid unintentional movement in the radial direction.

In yet one embodiment, the radial distance between the first tube and the second tube is smaller than 1 mm, preferably smaller than 0.5 mm most preferably smaller than 0.1 mm. Hereby, the design will reduce the amount of air leakage between the two tubes.

In one embodiment, the flow channel is arranged inside the first and second tube. Hereby, there is not need for any further flow channel guide than the actual first and second tubes. Thus, the first and second tubes may be used both for allowing the flow of air, damping the impact between the suction gripping member and the object to be sorted, and to guide the axial movement of the first tube relative the second tube both during damping and during ejection of the object to be sorted.

In another embodiment, the robotic vacuum sorting system comprises a plurality of first tubes and a plurality of second tubes constituting a plurality of pairs of first and second tubes being telescopically arranged and movable between a collapsed state and an extended state. Hereby, there may be several tubes functioning dampers of the impact between the suction gripping member and the object to be sorted, and to guide the axial movement of the first tube relative the second tube both during damping and during ejection of the object to be sorted. Hereby, the stability of the gripping member may also be increased.

In one embodiment, the plurality of pairs of first and second tubes are evenly distributed around a vertical center axis of the robotic vacuum sorting system, and wherein the flow channel is arranged in a flexible tube separated from the plurality of pairs of first and second tubes. Hereby, the dampers and guides are arranged to provide maximum stability.

According to a second aspect of the inventive concept, the objects of the invention are realized by a method for controlling a robotic vacuum sorting system according to any of the embodiments above. The method comprises the steps of identifying the object to be sorted, applying a suction air flow through the suction gripping member, moving the robot arm towards the object to be sorted so that the suction gripping member is brought into contact with the object to be sorted. The method further comprises restricting the air flow through an opening in the suction gripping member by means of the object to be sorted, at least partly compressing the springing means and moving the first and second tube towards the compressed state with the suction air flow, holding the object to be sorted with the suction air flow, and moving the robot arm towards a sorting position. Finally, the method comprises the steps of reversing the air flow and pushing the first and second tube towards the extended state with the springing means, and thereby ejecting the object to be sorted towards the sorting position.

The advantages of the method are largely analogous with the advantages of the system as described above. In large, the method will both reduce the wear on the robotic arm and simultaneously ensure a good fit of the suction member onto the object to be sorted, so that it may be lifted away with the force from the air flow generating system. Moreover, the method increases the acceptable margin of error in determining where the surface of the object is, and therefore how long towards the object the robotic arm should be moved.

In one embodiment, the method further comprises the step of damping the impact between the suction gripping member and the object to be sorted by moving the first and second tubes towards the compressed state when the suction gripping member is brought into contact with the object to be sorted.

Hereby, the components of the sorting system may obtain a longer technical lifetime since the wear and stress of the components may be reduces with the damping movement of the first and second tubes.

In one embodiment, the when the object to be sorted is identified, the material may also be identified, e.g. with a near infrared system or other visual means, and an acceleration or speed profile associated with the identified material is used when moving the object to be sorted towards the sorting position. In other embodiments, the weight is calculated and used for selecting an appropriate speed or acceleration profile for moving the object. Hereby, it is possible to avoid dropping heavy objects during the sorting method.

In yet one embodiment, the method further comprises the step of cleaning the filter with the reversed air flow. Hereby, the filter does not have to be manually cleaned. Also, the filter will be cleaned while the flow is directed towards the sorting position, which will allow any particles in the filter to be ejected towards the sorting position.

In one embodiment, the method further comprises the step of determining and/or measuring the weight of the object to be sorted and moving the robot arm with the object to be sorted towards the sorting position with an acceleration related to the determined weight of the object. Hereby, objects having a low weight may be sorted with a high acceleration (fast speed), and objects having higher weights may be sorted with a lower acceleration (lower speed) resulting in fewer drops. All in all, this will lead to a more efficient sorting operation as increasing the speed when possible reduces the time of sorting and reducing the number of drops of heavy objects also decrease total spent time on sorting.

In one embodiment, the method comprises the step of selecting an acceleration limit based on the determined or measured weight of the object to be sorted, and moving the robot arm with the object to be sorted towards the sorting position with an acceleration not exceeding the calculated acceleration limit. The wording "selecting" in the context of this application should be interpreted as including simply choosing an acceleration value from a list or function that based on the weight, or to calculate the acceleration limit based on the weight. In some embodiments, the suction force from the air flow may be used to calculate the acceleration limit.

In one embodiment the method comprises the step of determining if a successful grip of the object to be sorted is performed, preferably with the pressure sensor, and reporting an error in the vacuum sorting system to a supervisory control means if there was no successful grip. Hereby, the system may restart the attempt to grip the object to be sorted, and/or sending a warning signal to the system upon failure to grip an object.

It is emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

### Brief Description of the Drawings

By way of example, embodiments of the present invention will now be described with reference to the accompanying drawings, in which:
Figure 1 shows a robotic vacuum sorting system for sorting waste in accordance with one embodiment of the present inventive concept.
Figure 2 shows a longitudinal cross section of the gripping system in accordance with one embodiment.
Figure 3 shows a schematic view of the gripping system with springing means and sensor according to one embodiment.
Figure 4 shows a schematic view of the gripping system according to one embodiment.
Figure 5 illustrates a flow chart of the method.

### Detailed Description

Embodiments of the invention will now be described with reference to the accompanying drawings. The invention may, however, be embodied in many different forms and should not be construed as limited to the embodiments set forth herein. Rather, these embodiments are provided so that this disclosure will be thorough and complete and will fully convey the scope of the invention to those skilled in the art. The terminology used in the detailed description of the particular embodiments illustrated in the accompanying drawings is not intended to be limiting of the invention. In the drawings, like numbers refer to like elements.

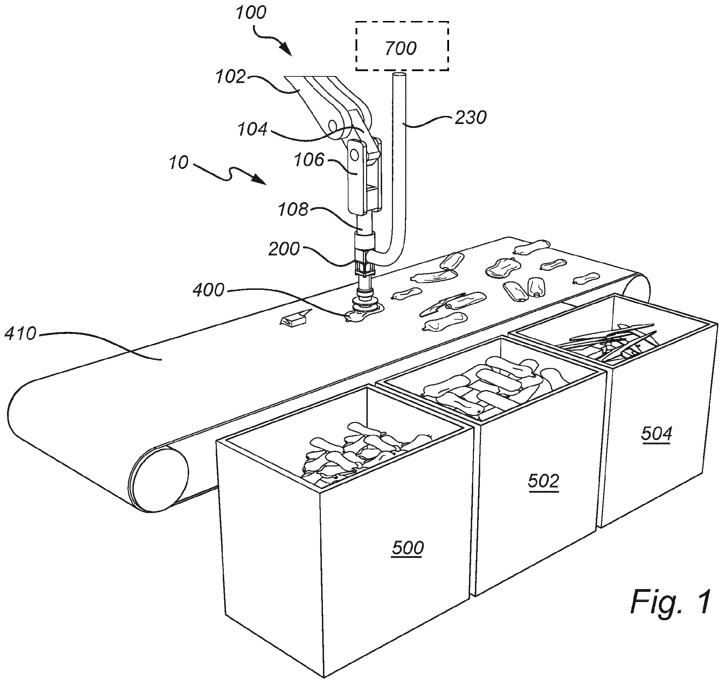

Figure 1 illustrates a robotic vaccum sorting system 10 for sorting waste in accordance with one embodiment of the present inventive concept. The robotic vaccum sorting system 10 comprises a robotic arm 100 for moving the gripping system 200 in a defined working area, and especially between an object to be sorted 400 and a plurality of sorting positions 500, 502, 504. The sorting positions in the figure are three different containers 500, 502, 504. The containers may be fewer or more in number, and also vary in size in accordance with the estimated volume of the objects to be sorted.

The objects to be sorted 400 may be any type of objects that are beneficial to be sorted in a recycling process. It may be the objects that are to be recycled, but it may also be non-recyclable objects, that are sorted out so the other objects may be sorted.

In the specific embodiment illustrated in figure 1, the robotic arm comprises an outer arm 106, an intermediate arm 104 and an inner arm 102. At the outer end of the outer arm 106, it comprises a tool mounting portion 108. The arms 102, 104, 106 are used for moving the gripping system 200 in a three-dimensional manner in a defined working area. The arms may also be both rotatable and pivotable in each joint. The robotic arm in the figure is only to be seen as an illustrative example, and the robot arm may in other embodiments be any type of industrial moving machine that allows to be moved in a working area to pick and place objects in said area.

The objects are illustrated on a conveyer belt 410 so that the objects are moved from a first end of the conveyer belt to a second end. The working area of the robot arm is defined over a portion of the conveyer belt and the sorting positions 500, 502, 504.

The air flow generating means 700 is merely schematically illustrated in figure 1, and may be any type of air flow generator, such as a suction/blowing pump or compressor. It may also be two different pumps for the different directions of flow that are connected to the flow channel via one or several valves for controlling the suction and blowing flow.

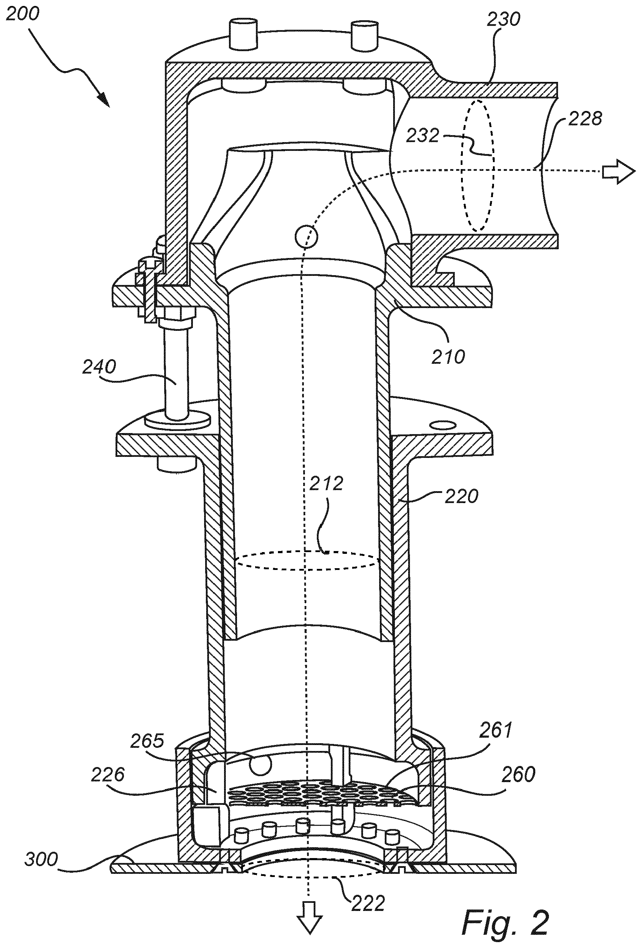

Figure 2 illustrates a longitudinal cross section in a sideview of the gripping system 200 according to one embodiment. The gripping system 200 comprises a first tube 210 and a second tube 220, wherein the first tube is partly arranged inside the second tube 220. In other embodiments, it is possible to have the second tube to be partly inserted into the first tube instead.

The first 210 and second 220 tube are telescopically arranged and movable between a collapsed state and an extended state. In the collapsed state, the first tube 210 is arranged as far into the second tube 220 as possible, and in the extended state the second tube is arranged with as small overlap as possible. The axial overlap in the collapsed state may be about 70-200mm and in the extended stat about 10-50mm in the collapsed state. The stroke length, i.e. the difference of the overlap in the collapsed state compared to the extended state gives the full damping stroke length.

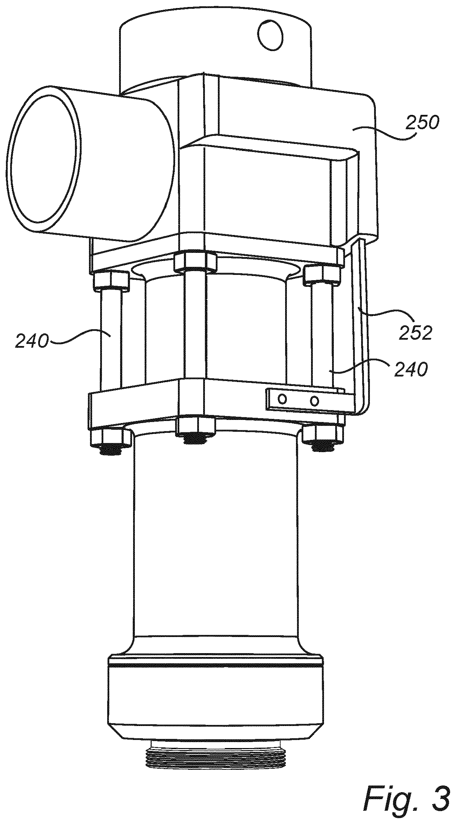

The springing means 240 is arranged so that it may exert an axial force on the first and second tube towards the extended state. In figure 2 only one springing means 240 is illustrated. In figure 3 there are instead 4 springing means illustrated. Any number of springing means may be conceivable. It is also possible to have one springing means coaxially arranged around the first and second tubes (not illustrated). The function of the springing means, which may be coil springs, resilient members such as rubber or any other type of spring, is that it shall push the first and second tube towards the extended state.

In the specific embodiment in figure 2, the gripping system 200 comprises a connecting portion 230, that is fluidly connected to the first tube 210. Both the first tube 210, the second tube 220 and the connecting portion 230 are hollow. The cavities of the first tube 210, the second tube 220 and the connecting means 230 define a flow channel 228. The flow channel 220 is further fluidly connected to the flow generating means 700 as is schematically illustrated in figure 1.

The first tube 210 comprises an inner cross-sectional opening 212, constituting the first tube's orifice. The second tube also comprises an inner cross-sectional opening 222, constituting the second tube's orifice. Finally, the connecting means 230 also comprises an inner cross-sectional opening 232, constituting the connecting means orifice. The discussed orifices of these components are located at the smallest areas of each component.

In order to avoid undesirable pressure drop of the air flow (or other suitable gas) sucked through the flow channel 228, the orifices 212, 222 and 232 of the first tube, second tube and connecting means 230 may have substantially the same orifice size. In one design, the orifices are slightly increased downstream of the suction fluid flow.

In the illustrated example the first tube 210 and second tube 220 are made of materials with different wear coefficient (or rigidity/abrasion coefficient). Preferably, the first tube 210 is made of a material having a higher wear coefficient, and the second tube is made of a material having a lower wear coefficient. As explain above, a larger coefficient indicates that the material is less resistant to wear, and a lower coefficient that it is more prone to wear. As an example, polythene has a wear coefficient of about 1.3 x 10⁻⁷ and hard tool steel has a wear coefficient of 1.3 x 10⁻⁴. Another way to describe this would the materials abrasive wear resistance.

In one example, the first tube 210 may be made of a metallic material e.g. comprising iron, stainless steel, or aluminum. The second tube 220 can be made of a material comprising a polymer material such as PU or ABS, for example.

The use of materials with different abrasion coefficients enable a lubrication free operation. A lubrication free operation is preferable since there is a lot of dust in the application and lubrication accumulates dust particles leading to wear and tear of the system.

The flow channel comprises a filter cavity 226. In the illustrated example the filter cavity is arranged in the second tube 220. This is preferable since the second tube is closer to the opening where the gripping system 200 is to engage the object to be sorted. Thereby the particles collected by the filter will not travel too far into the gripping system. The filter cavity 226 has a larger cross-sectional area than the inner cross-sectional openings 212, 222 and 223. The reason to this is that the sum of the orifice openings 261 in the filter 260 should have an equal or larger area as the orifices 212, 222 and 232 of the first tube, second tube and connecting means.

Moreover, the first tube 210 and the second tube 220 preferably have a high degree of rigidity to ensure that the first and second tubes do not move in an undesirable manner, e.g. in radial movements, during the sorting process. If the tubes move in unwanted radial movements, it could lead to air leakage and loss of vacuum (negative pressure) and unintended drop of the object to be sorted 400. The rigidity of the first tube is especially beneficial when sorting heavy objects.

The radial distance between the first and second tube may be below 1mm and is preferably below 0.5mm so as to reduce the air leakage.

A pressure sensor 265 may be arranged in the flow channel 228 indicating potential malfunction of the system or blockage of the flow channel. The sensor may both be used to measure that an object is blocking the air flow, and with what force the object is held to the gripping system 200. The force by which the object is held may be used to calculate at what speed and/or acceleration the robotic arm should move with the object to be sorted.

The pressure sensor 265 may also be used to determine that the degree of blockage is unsatisfying. This may result in that the robotic arm tries to approach the object to be sorted in a new contact. It may also, in addition or alternatively, be used to indicate that there is a leakage in the flow channel, which may be due to malfunction of some of the components. If a detection of air flow leakage is indicated (e.g. through detecting a lower negative pressure than expected) the sensor may send an alarm signal indication that one or more component needs maintenance, repair, or replacement. The pressure sensor 265 is illustrated as being placed in the second tube 220 but may be arranged anywhere in the flow channel 228.

Finally, the gripping system 200 comprises a suction gripping member 300 in the outermost end. The suction gripping member 300 may be a flexible member that is able to be formed so that it adapts to the surface of the object to be sorted. When the robot arm 100 pushes the gripping system 200 towards the object to be sorted, the suction gripping member 300 is snugly fitted to the surface of the object to be sorted so that is may be held by the negative pressure in the air flow 228. It may e.g. be a suction cup, a rubber nozzle or similar and may be of any form that functions as described. The gripping member may be exchanged after being used in a number of lifts or upon damage, so as to ensure a snugly fit towards the object to be sorted

Figure 3 illustrates a schematic view of the gripping system 200 according to one embodiment. The gripping system comprises a sensor 250 and mechanical indicator 252. The sensor 250 may be used for sensing the axial position of the first and second tubes between the extended state and the collapsed state. This information may be used to know if the suction gripping member is pushed enough onto/into the object to be sorted. Also, it may be used to sense that something is malfunctioning, such as that the springing means 240 are not brining the first and second tubes into the extended state for some reason. If this is detected, as malfunctioning warning may be sent to a system for indication the malfunctioning, which may also include a prompt to conduct maintenance, repair or replacement on any of the components involved in the movement of the first tube relative the second tube. Thereby the sensor 250 may serve as an indicator for potential failure of the sliding system.

The sensor 250 may comprise a capacitive or inductive sensor, or any other type of sensor being able to indicate a position. The sensor may also work together with a vision system that detects the stroke length in the movements of the first and second tubes.

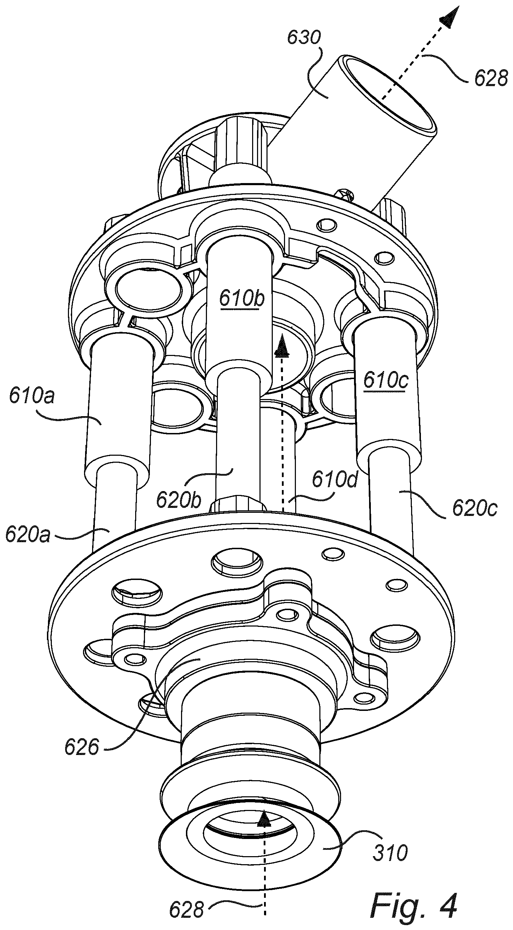

Figure 4 illustrates a schematic view perspective view of a gripping system 600 accordance to one embodiment of the inventive concept. The overall principles of the embodiments in the above described embodiments all relate also to this embodiment, except that the flow channel 628 is not arranged inside the first and second tubes. Instead, in this exemplary embodiment, the gripping system 600 comprises a plurality of first tubes 610a - 61 Od and a plurality of second tubes 620a - 620d. The plurality of first tubes and the plurality of second tubes constituting a plurality of pairs of first and second tubes being telescopically arranged and movable between a collapsed state and an extended state.

The connecting means 630 is still fluidly coupled to an air flow generating system 700 (not shown in fig 4), a gripping member 310 is arranged at the lower and of the gripper system, as in the previous embodiment. Also, a filter cavity 626 is arranged just above the gripping member 310, in which a filter (not shown) is placed. As has been explained above, also in this embodiment the plurality of first tubes and plurality of second tubes are preferably made of a material having different wear coefficients. In this embodiment, the plurality of first and second tube pairs are evenly distributed about a vertical center axis of the gripping system 600. In the illustrated specific example, there are four pairs of first and second tubes. It may also be fewer pairs or more pairs in other examples.

The gripping member 310 is fluidly connected with the air flow generating system via a flow channel. The flow channel is arranged in a flexible tube (not shown) which is separated from the plurality of pairs of first and second tubes. In one embodiment the flexible tube is arranged in the center of the plurality of pairs of first and second tubes.

The filter arranged in the filter cavity 626 preferably has hole openings with the same cross sectional area as the flow channel. Also, the flexible tube preferably has an orifice corresponding to the orifice of the flow channel, so as to avoid pressure drops.

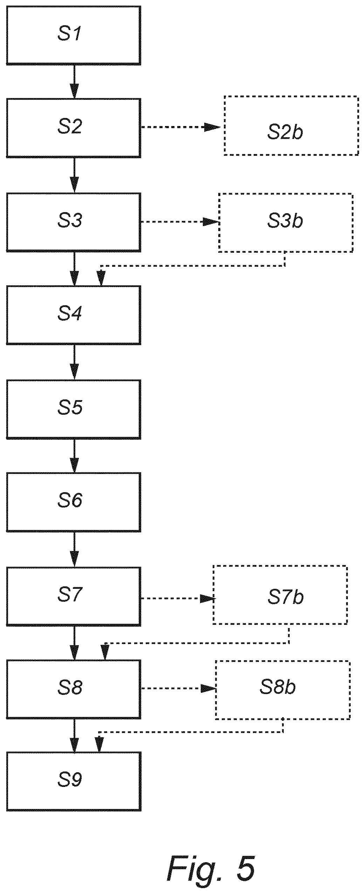

The function of the device will now be described in a general description, and thereafter the method will be described in more detailed in relation to the flow chart of figure 5.

The object to be sorted 400 may be identified with a 3D identification system, such as a stereo camera system or a combination of e.g. laser and camera, and/or a near infrared system. Suction air flow is applied through the flow channel 228 and the suction gripping member 300 and the robotic vacuum sorting system 10 moves towards the object to be sorted 400 and is brought into contact with the object to be sorted 400. Upon engaging the object to be sorted 400 with the gripping member 300 and lowering the robotic vacuum sorting system 10 towards the object, the air flow is restricted by the object to be sorted 400 on the suction gripping member 300 an negative pressure is generated in the flow channel 228.

The negative pressure in the flow channel 228 and the movement of the robotic vacuum sorting system 10 towards the object is causing the first and second tube to move from an extended state towards a collapsed state wherein the overlap of the first and second tube will increase. In one embodiment the force exerted by the springing means in the collapsed state is larger than the force exerted by the springing means in the extended state and the springing force dampens the impact of the gripping member 300 on the object to be sorted 400.

The generated air flow in the flow channel 228 is holding the object sucked against the gripping member 300 and towards the air flow generating system. The the robotic vacuum sorting system 10 subsequently moves from the picking position towards a predetermined sorting position 500, 502, 504.

When the sorting position is reached the air flow is reversed and the pressure in the flow channel increases and the first and second tube are pushed with the springing means from the collapsed state to the extended state. The increase in pressure and the downwards movement of the second tube with the springing means ejects the object 400 from the gripping member. The reversed air flow increases the pressure in the flow channel 228 and also cleans the filter 260 from potential debris and small items.

Now, the method will be described in relation to figure 5 which illustrates a flow chart of the inventive method described. The flow chart comprises a number of steps to be conducted S1-S9. Moreover, there are three sets of optional steps in relation to steps s2, s3 and s8. These optional steps are illustrated with dashed lines in the figures.

Please note that some of these steps, although having a number, may be conducted in a different order. E.g. the step of identifying an object may be conducted before, during and/or after engaging with the object.

The method described is a method for controlling a robotic vacuum sorting system. The first step in this method is to identify (S1) the object to be sorted. This identification may be done with e.g. vision systems and/or Near Infrared (NIR) systems. The detection may entail detecting objects based on what type of objects they are, and/or what type of material they are made of. As a second step the method entails applying S2 a suction air flow through the suction gripping member 310. The suction air flow is generated by the suction air flow generating means 700 as has been explained above.

Further, an optional step of determining S2b the weight of the object to be sorted may be conducted. This may be done by e.g. determining the objects material and volume which may be basis for either a calculation of the weight or for selecting an appropriate weight from a list of pre-classified objects or measuring the weight of the object to be sorted with a measure sensor.

Further, there is an option of calculating an acceleration limit, or receiving an acceleration and/or speed, that is to be used for the identified object. This may for example be used so that a lighter object, such as a paper or plastic container may be moved with a higher speed and/or acceleration than a heavier object, such as a metal waste or glass object. This enables the sorting system to sort relatively light objects with a high speed and heavier objects with a lower speed, to avoid dropping the heavy objects.

Regardless of if an acceleration or speed is calculated/retrieved based on the weight/type of object, the next step in the method is to move S3 the robot arm towards object to be sorted so that the suction gripping member is brought into contact with the object to be sorted.

Another optional step may be damping S3b the impact between the suction gripping member and the object to be sorted by moving the first and second tubes towards the compressed state when the suction gripping member is brought into contact with the object to be sorted.

Thereafter, the next step is to restrict S4 the air flow through an opening in the suction gripping member by means of the object to be sorted. Thus, by bringing the suction gripping member in abutment with the object to be sorted, the air flow through the gripping member is blocked. That will lead to a buildup of negative pressure that will hold the object to be sorted in place.

The next step, which is preferably conducted simultaneously with the previous step, is at least partly compressing S5 the springing means and moving the first and second tube towards the compressed state with the suction air flow. This is partly made by the negative pressure, but also by the force generated by the robotic arm pushing the suction gripping member onto/into the object to be sorted.

The next step, also happening at least in parallel with the previous step the method entails holding S6 the object to be sorted with the suction air flow.

Once the object to be sorted is securely held by the suction gripping member, which may be confirmed by the pressure sensor sensing a negative pressure in the air flow channel, the robot arm will be moved S7 towards a sorting position. The sorting position will be determined based on what the object is to be sorted. There may be one or several optional sorting positions to choose from.

If the step of determining or measuring the weight is conducted, the arm may optionally be moved towards the sorting position with an acceleration/speed S7b related to the determined weight of the object.

Thereafter, the method includes reversing S8 the air flow and pushing the first and second tube towards the extended state with the springing means, and thereby ejecting S9 the object to be sorted towards the sorting position.

The ejection may enable that the robot arm does not need to be moved the entire way to the sorting position, but that the object may be ejected in a trajectory the last way due to the ejection. This will increase efficiency of the sorting system as the robotic arm may have shorter movements.

As a last illustrated optional step, the filter may be cleaned S8b by means of the reversed air flow.

The method may further include the step of determining a successful grip of the object to be sorted, preferably with the pressure sensor, and reporting an error in the vacuum sorting system to a supervisory control means if there was no successful grip.

As explained above, the material, shape (for example length, width, height, or form) and weight of the object to be sorted 400 may be identified with a 3D detection system (not illustrated). Further a data set comprising acceleration, and/or speed and movement profile of the robotic vacuum sorting system 10 may be based on different object parameters sensed or calculated as explained above. Heavy objects, for example metallic objects or complex products like an airbag, will be sorted with different acceleration parameters and movement profile than lighter objects, for example a PET bottle. Heavy objects will be sorted slower than light objects. The acceleration parameters and movement profile are chosen so to ensure that the objects to be sorted does not disengage from the gripping system 200 during movement to the sorting position. By estimating or calculating the weight of the object to be picked, an acceleration limit may be calculated based on the weight and the force generated from the air flow generating means.

E.g. if the object may be held to the gripping system with a force of 50N, the acceleration of the robotic arm at the point where the gripping system is holding the object to be sorted can be limited to less than a=F/m where F is the limit force (50N) and m is the weight of the object and a becomes the limit acceleration. It is also conceivable that the force from the air flow generating means is adapted, so that a lager flow, and therefore suction force, is used when picking up an object above a certain threshold value.

When taking the weight of the object in consideration, it is possible to sort light objects much faster than the heavier objects, resulting in a more efficient sorting. Obviously, the limit force may vary, for example between 10N and 100N. Also, the set acceleration limit may comprise a security level factor, e.g. 150% or 200% security factor may be used, so that the actual acceleration used is 2/3 or ½ of the theoretical acceleration limit. This would result in fewer drops of objects to be sorted.

It is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required, or essential to all embodiments or to that which is claimed herein. Although specific terms are employed herein, they are used in a generic and descriptive sense only and not for purposes of limitation.

## Claims

1. A robotic vacuum sorting system for waste material, comprising
- a robotic arm adapted to move in a three-dimensional manner
- a suction gripping member, fluidly coupled to an air flow generating system via a flow channel, configured to grip an object to be sorted,
- a first tube and a second tube, telescopically arranged and movable between a collapsed state and an extended state,
- a springing means for exerting an axial force on the first and second tube towards the extended state, and
- a filter for hindering objects to be sucked towards the air flow generating system,
wherein the first tube is coupled to the robot arm, and the suction gripping member is coupled to the second tube and configured to move in tandem with the second tube between an extended position and a collapsed position, and wherein the air flow generating system is adapted to reverse an air flow to eject the object and the springing means is configured to move the first and second tube from the collapsed state to the extended state when the air flow is reversed, so as to create an additional ejecting movement.

2. Robotic vacuum sorting system according to claim 1, comprising a sensor configured to determine a positional state of the first tube relative the second tube.

3. Robotic vacuum sorting system according to claim 2, wherein the sensor is adapted to detect a successful grip of the object to be sorted and/or an overload state upon gripping an object of a weight exceeding a predetermined value.

4. Robotic vacuum sorting system according to any of the preceding claims, further comprising a pressure sensor configured to sense an air pressure in the flow channel to detect air blockage.

5. Robotic vacuum sorting system according to any one of the preceding claims, wherein the first and second tubes are in the extended state until a force from the vacuum brings the first and second tube into the collapsed state upon engaging an object to be sorted.

6. Robotic vacuum sorting system according to any one of the preceding claims, wherein the cross-sectional flow opening in the flow channel is configured to avoid pressure drop in the flow channel.

7. Robotic vacuum sorting system according to any one of the preceding claims, comprising a filter cavity arranged in the flow channel, said filter cavity having a larger cross-section than the flow opening, and wherein a filter opening is equal or larger than the cross sectional flow opening in the flow channel.

8. Robotic vacuum sorting system according to any one of the preceding claims, wherein the first tube is made of a material of a first wear coefficient and the second tube is made of a material of a second smaller wear coefficient.

9. Robotic vacuum sorting system according to any one of the preceding claims, wherein the flow channel is arranged inside the first and second tube.

10. Robotic vacuum sorting system according to any one of claims 1-8, comprising a plurality of first tubes and a plurality of second tubes constituting a plurality of pairs of first and second tubes being telescopically arranged and movable between a collapsed state and an extended state.

11. Robotic vacuum sorting system according to claim 10, wherein the plurality of pairs of first and second tubes are evenly distributed about a vertical center axis of the robotic vacuum sorting system, and wherein the flow channel is arranged in a flexible tube separated from the plurality of pairs of first and second tubes.

12. Method for controlling a robotic vacuum sorting system according to any of the preceding claims, comprising the steps:
- identifying (S1) the object to be sorted,
- applying (S2) a suction air flow through the suction gripping member,
- moving (S3) the robot arm towards the object to be sorted so that the suction gripping member is brought into contact with the object to be sorted,
- restricting (S4) the air flow through an opening in the suction gripping member by means of the object to be sorted,
- at least partly compressing (S5) the springing means and moving the first and second tube towards the compressed state with the suction air flow,
- holding (S6) the object to be sorted with the suction air flow,
- moving (S7) the robot arm towards a sorting position,
- reversing (S8) the air flow and pushing the first and second tube towards the extended state with the springing means, and thereby
- ejecting (S9) the object to be sorted towards the sorting position.

13. The method for controlling a robotic vacuum sorting system according to claim 12, further comprising
- damping (S3b) the impact between the suction gripping member and the object to be sorted by moving the first and second tubes towards the compressed state when the suction gripping member is brought into contact with the object to be sorted.

14. The method for controlling a robotic vacuum sorting system according to claim 12 or 13, further comprising the step of
- cleaning (S8b) said filter with the reversed air flow.

15. The method for controlling a robotic vacuum sorting system according to any one of claims 12-14, further comprising the step of
- determining (S2b) or measuring the weight of the object to be sorted,
- moving (S7b) the robot arm with the object to be sorted towards the sorting position with an acceleration related to the determined or measured weight of the object.
